# EUROPEAN PATENT APPLICATION

(11) **EP 1 471 344 A2**
(43) Date of publication of application: **27.10.2004**
(21) Application number: 04077155.2
(22) Date of filing: 01.05.2001
(51) Int. Cl.: G01N 1/22, G01N 15/06

(54) **Automated sample collection workstation**

(30) Priority: 01.05.2000 US 201004 P
(62) Divisional of application: 01932778.2
(71) Applicant: GLAXO GROUP LIMITED, Greenford, Middlesex UB6 ONN (GB)
(72) Inventor: The designation of the inventor has not yet been filed
(74) Representative: Rice, Jason Neale

(57) **Abstract**

An automated sample collection workstation comprises a motor actuated sealing assembly having upper (23) and lower (25) clamping plates and fixtures to which particle-containing components of a particle testing unit such as an inertial impactor are mounted. The workstation also includes a sampling module (SM) including a plurality of sampling needles (SN) movable along two axes, and a solvent flow-through system. The solvent flow-through system includes a pump and multi-position valve arrangement communicating with the sealing assembly and the sampling module. The workstation can also include a pump calibration system communicating with the solvent flow-through system.

## Description

### Technical Field

The present invention is directed generally to the field of sample collection and assaying and, more particularly, to automation of sample collection and preparation procedures.

### Background Art

Sample preparation and collection tasks are performed in a wide variety of research and testing procedures. As one example, sampling tasks are performed in conjunction with research relating to pharmaceutical aerosol and powder drug delivery. A popular instrument utilized in this area by those skilled in the art in performing analytical assays is the particle sizing impactor. One specific type of impactor is the multi-stage cascade impactor. The cascade impactor relies on inertial impaction for characterizing aerodynamic particle size distribution of Metered Dose Inhaler (MDI) and Metered Dose Powdered Inhaler (MDPI) products. Such an instrument is useful in that all aerosols can be classified by extensive experimental proofs and empirical verification. Once certain properties of the examined aerosol are known, the cascade impactor can enable comprehensive aerosol definition.

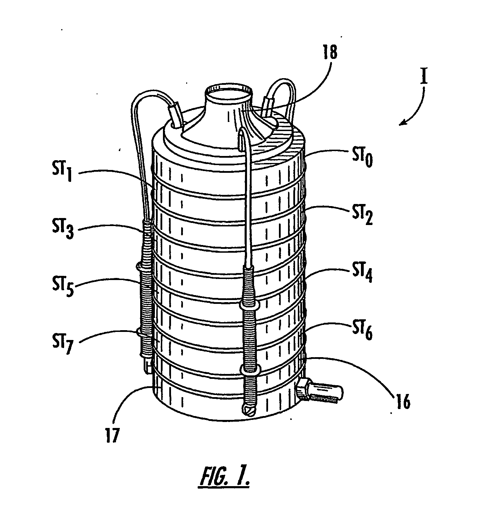

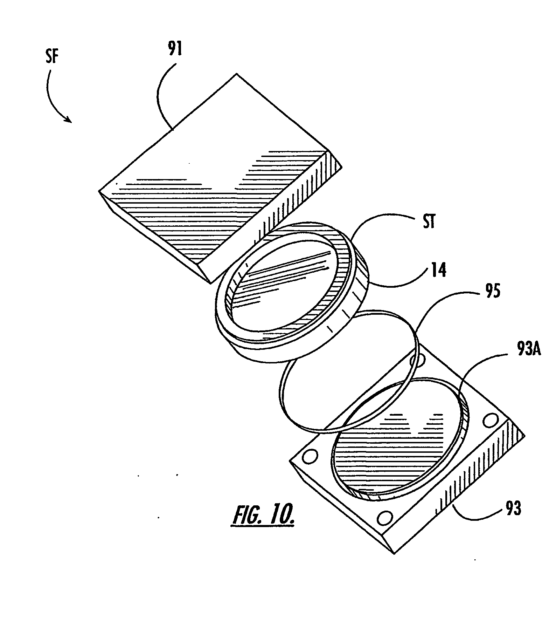

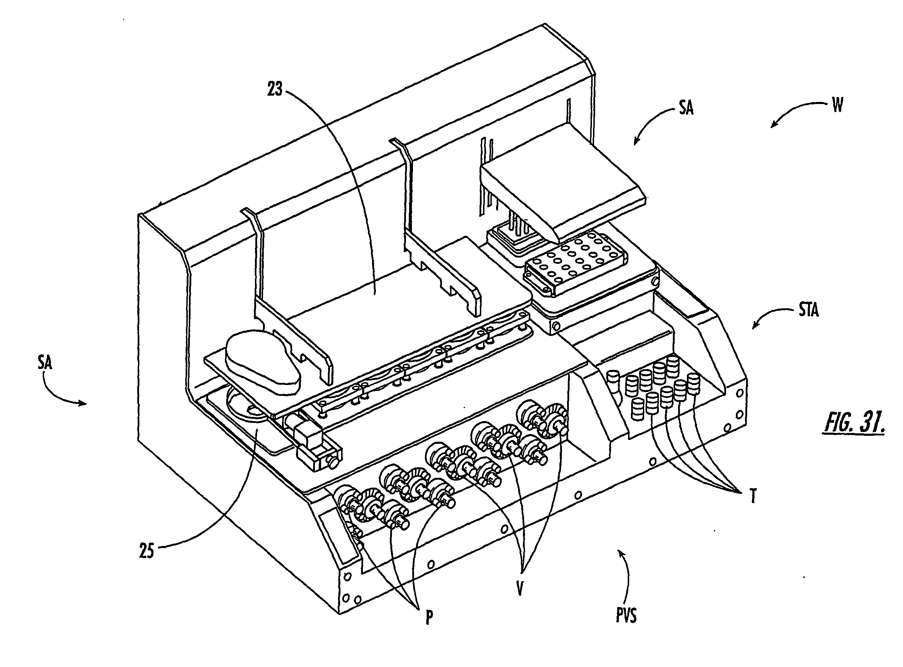

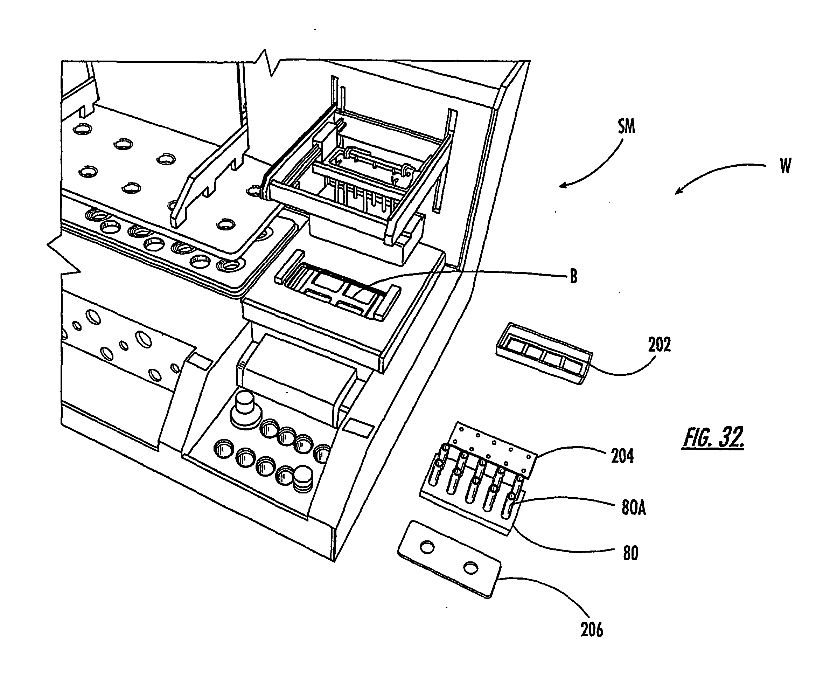

Referring to Figure 1, a cascade impactor generally designated **I** typically is constructed of eight to ten classification stages **ST** that enable, for example, classification of aerosols ranging from 10 to 0.4 :m at 28.3 lpm. In Figure 1, cascade impactor **I** includes a stage zero **ST**_{**0**}, stages **ST**_{**1**} **- ST**_{**7**}, a final filter **16**, a base element **17**, and an inlet cone **18**. Each stage **ST** consists of a jet plate **12** and a stainless steel impaction disc **14** (see Figures 10 and 32) or filtration media substrate. Filter **16** collects all particles smaller than 0.4 :m. Pre-separators and other special accessories can be added to allow the cascade impactor to operate at higher flowrates to enable collection of submicron particulate. In Figure 1, for example, inlet cone **18** is provided for testing of aerosols. A pre-separator **21** (see Figure 31) would be substituted for inlet cone **18** when dry powders are to be tested. At each stage **ST**, an aerosol or powder stream passes through the jets of jet plate **12** and around the impaction disc **14**. Entrained particles with enough inertia settle upon the impaction surfaces, while smaller particles remain entrained to be deposited upon subsequent stages **ST**. High jet velocities enable smaller particles to be characterized efficiently. The aerodynamic diameter of the collected aerosol depends upon the jet orifice velocity within each stage **ST**, the distance between the jets and impaction surface, and the collection characteristics of the preceding jet stage **ST**.

As is known by those skilled in the art, instruments such as cascade impactor **I** are employed as part of time-consuming and tedious manual assay procedures. In a typical manual assay, the cascade impaction test includes the following major tasks. Cascade impactor **I** is assembled and then dosed with the product to be tested. After dosing, cascade impactor **I** is separated into its individual components. Each stage **ST** is rinsed with a solvent, and the resulting sample consisting of solvent and particles carried thereby are funneled into a collection container such as a laboratory flask. Additional solvent is then added to dilute the sample to the appropriate volume. The diluted sample is then mixed and assayed by appropriate analytical equipment such as a high-pressure liquid chromatography (HPLC) device.

The desire by those skilled in the art to ameliorate the time and effort required to perform such testing led to the development of the present invention.

### Disclosure of the Invention

Accordingly, the present invention provides a sealing assembly for use in an automated rinsing and sample collection workstation. The sealing assembly comprises a lower damping plate, an upper clamping plate, and a clamping drive assembly. The upper damping plate is movable with respect to the lower clamping plate and is adapted for sealable engagement with the lower clamping plate. The clamping drive assembly includes a track plate having a track, an axle support, an axle supported by the axle support, and a bracket connected to the upper clamping plate and to the axle. The bracket is movably and rotatably supported in the track and pivotable about the axle. The damping drive assembly also includes a motor and a drive member powered by the motor. The drive member is adapted to move the bracket along the track.

According to another embodiment of the present invention, the sealing assembly includes a deck, a lower clamping plate mounted on the deck, and an upper clamping plate movable with respect to the lower clamping plate and adapted for sealable engagement with the lower clamping plate. A throat fixture is mounted on the deck and rotatable onto the lower clamping plate.

According to further embodiment of the present invention, the sealing assembly includes a lower clamping plate and an upper clamping plate. The upper clamping plate is movable with respect to the lower clamping plate and is adapted for sealable engagement with the lower clamping plate. Also provided is an impactor flow unit fixture such as a pre-separator fixture or an inlet cone fixture. The impactor flow unit fixture includes an upper portion and a lower portion. The upper portion is mounted to the upper clamping plate and the lower portion mounted to the lower clamping plate.

The present invention also provides a solvent flow-through system for use in an automated rinsing and sample collection workstation. The system comprises a sealing assembly, a sampling module, a plurality of pairs of metering pumps, and a plurality of multi-position valves. Each valve communicates with a corresponding one of the pairs of metering pumps, and adapted to transfer a fluid to and from the metering pumps, the sealing assembly and the sampling module.

The present invention further provides a sampling module for use in an automated rinsing and sample collection workstation. The sampling module comprises a guide plate having a track disposed along a first axis, a first bracket movably supported in the track, a first motor, and a first drive member powered by the first motor and adapted to move the first bracket along the track. A guide member is movable with the first bracket. Also provided are a second bracket supported by the guide member and movable along the guide member along a second axis, a second motor, and a second drive member powered by the second motor and adapted to move the second bracket along the guide member.

The present invention additionally provides a pump calibration system for use in an automated rinsing and sample collection workstation. The calibration system comprises a balance, a sampling module including a sampling needle, an adjustable metering pump communicating with the sampling needle, and a reservoir removably disposed on the balance.

The present invention still further provides an automated rinsing and sample collection workstation. The workstation comprises a sealing assembly, a sampling module including a sampling needle, and a solvent flow-through system. The solvent flow-through system includes a pump and valve which communicate with the sealing assembly and the sampling needle. The workstation can also include a pump calibration system communicating with the solvent flow-through system.

In addition, the present invention provides a method for rinsing and collecting particulate samples from a particulate testing device. A sealing assembly is provided and includes a lower clamping plate, an upper clamping plate movable in relation to the lower clamping plate, and a plurality of fixtures. A plurality of particle-containing components from a particulate test device are installed onto corresponding fixtures of the sealing assembly. The upper clamping plate is caused to engage the lower clamping plate, whereby the upper and lower clamping plates cooperate with the fixtures to define a plurality of separate rinsing chambers in which corresponding particle-containing components are disposed. Solvent is caused to flow through the sealing assembly to transport particles from each rinsing chamber through a plurality of separate flow channels.

The present invention also provides a method for automatically calibrating one or more metering pumps. A workstation is provided and includes a fluid circulation system and a metering pump. A sampling module is provided and includes a sampling needle communicating with the fluid circulation system and a sample rack disposed on an open rack mounting region. A balance device is installed below the rack mounting region. The sample rack is removed from the rack mounting region. A reservoir is installed in the rack mounting region in operative engagement with the balance device. The metering pump is caused to transfer an indicated quantity of fluid through the fluid circulation system to the sampling needle, and the quantity of fluid is dispensed into the reservoir. The balance device is caused to measure an actual quantity of fluid dispensed into the reservoir. The metering pump is adjusted if the actual quantity measured by the balance device is different from the indicated quantity indicated by the metering pump.

It is therefore an object of the present invention to provide a workstation for automating steps required in the process of preparing solutions containing samples collected by a testing unit such as a particle impaction testing unit.

It is another object of the present invention to provide a workstation which establishes separate, sealed flow channels through various components of a particle testing unit.

It is a yet another object of the present invention to provide a workstation which includes an automated sealing assembly for various components of a particle testing unit.

It is a further object of the present invention to provide a workstation which includes custom fixtures adapted for mounting various components of a particle testing unit within a sealing assembly.

It is a still further object of the present invention to provide a workstation which includes a flow-through system for directing multiple solvents to and from various modules of the workstation with improved efficiency and under improved control, and which is operable between open and closed loops.

It is an additional object of the present invention to provide a workstation which includes a sampling module which enables parallel transfer of solvent to several and different types of solvent vial racks and vials without the need for reconfiguration or adjustment of the sampling module or sampling needles and solvent transfer lines associated with the sampling module.

It is also an object of the present invention to provide an automated system for calibrating metering pumps included with a rinsing and sample collection workstation.

Testing and validation conducted by applicants has demonstrated that the workstation provided according the present invention and its associated systems and assemblies are capable of yielding data equivalent to that typically observed in conjunction with conventional manual testing.

Some of the objects of the invention having been stated hereinabove, other objects will become evident as the description proceeds when taken in connection with the accompanying drawings as best described hereinbelow.

### Brief Description of the Drawings

Figure 1 is a front elevation view of a cascade impactor unit known in the prior art and usable in conjunction with the present invention;
Figure 2 is a perspective view of an automated rinsing and sample collection workstation according to the present invention;
Figure 3 is a perspective view of the framework provided for the workstation of Figure 2;
Figure 4 is an exploded view of the framework of Figure 3;
Figure 5 is a perspective view of the workstation of Figure 2 with a portion of the framework removed;
Figure 6 is a perspective view of a metering pump and associated drive according to the present invention;
Figure 7 is a perspective view of a sampling module according to the present invention;
Figure 8 is a perspective view of the sampling module of Figure 7 with a cover thereof removed;
Figure 9 is a perspective view of the workstation of Figure 2 illustrating fixtures provided therewith;
Figure 10 is an exploded view of a stage fixture and associated stage according to the present invention;
Figure 11 is another exploded view of a stage fixture and associated stage of Figure 10;
Figure 12 is a perspective view of the stage fixture and associated stage illustrated in sealed form;
Figure 13 is a perspective view of a mouthpiece fixture illustrated in sealed form;
Figure 14 is an exploded view of the mouthpiece fixture of Figure 13 with an associated mouthpiece;
Figure 15 is an exploded view of another mouthpiece fixture with another associated mouthpiece;
Figure 16 is a perspective view of a throat fixture and associated throat according to the present invention;
Figure 17 is an exploded view of the throat fixture and associated throat of Figure 16;
Figure 18, 19, 20 and 21 are perspective views of the throat fixture of Figure 16 with the throat loaded therein;
Figure 22 is a perspective view of a pre-separator fixture according to the present invention;
Figure 23 is an exploded view of the pre-separator fixture of Figure 22 with an associated pre-separator;
Figure 24 is an exploded view of an inlet cone fixture and associated inlet cone according to the present invention;
Figure 25 is another exploded view of the inlet cone fixture and inlet cone of Figure 24;
Figures 26, 27 and 28 are perspective views of the workstation of Figure 2 illustrating the process of loading various parts of an impactor unit thereon in accordance with the present invention;
Figures 29, 30 and 31 are perspective views of the workstation of Figure 2 illustrating the operation of a sealing assembly provided therewith in accordance with the present invention; and
Figures 32, 33, 34, 35, 36, 37 and 38 are perspective views of a portion of the workstation of Figure 2 illustrating the operation of the sampling module provided therewith in accordance with the present invention.

### Detailed Description of the Invention

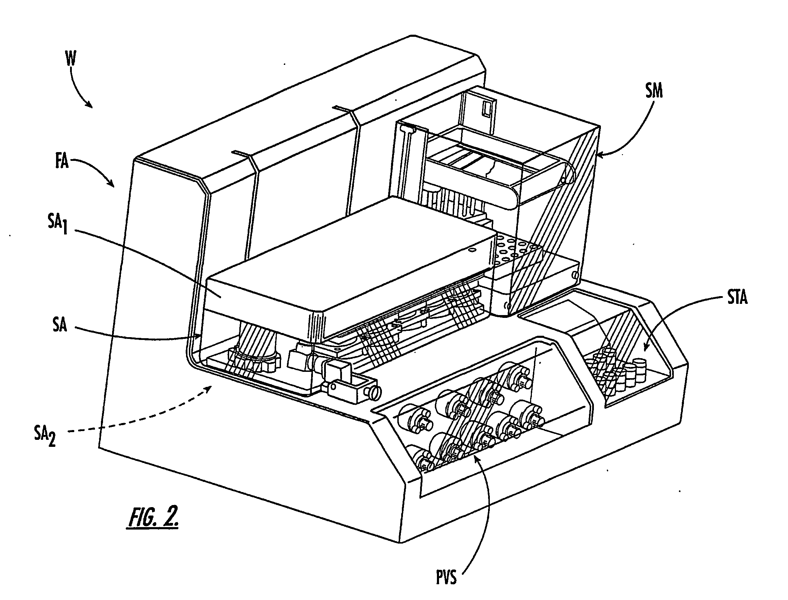

Referring to Figures 2 - 9, an automated rinsing and sample collection workstation generally designated **W** is provided in accordance with the present invention. Referring particularly to Figure 2, workstation **W** includes a frame assembly generally designated **FA** on which several modules are mounted. The modules include an automated sealing assembly generally designated **SA** and an automated solvent flow-through system, which flow-through system is defined by an automated metering pump and valve system generally designated **PVS**, a solvent tube arrangement generally designated **STA** and an automated sampling module generally designated **SM**. The operation of the solvent flow-through system and the interaction of its various components is described hereinbelow. All automated modules can be programmed and controlled by software.

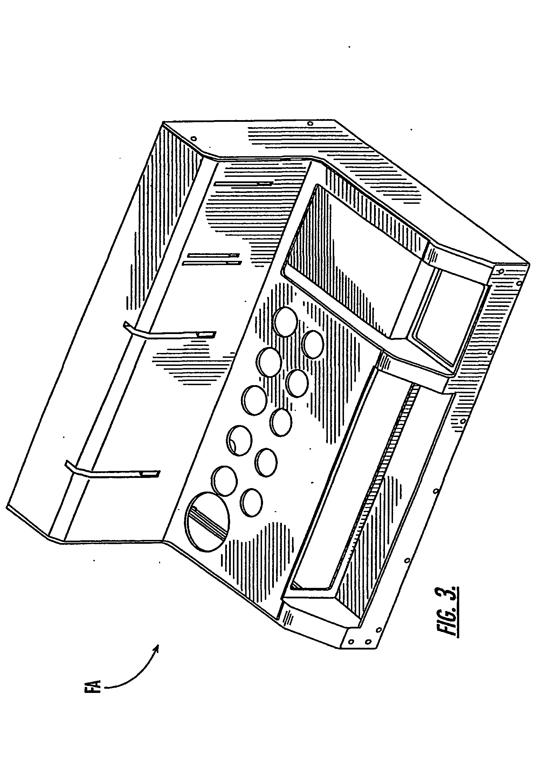

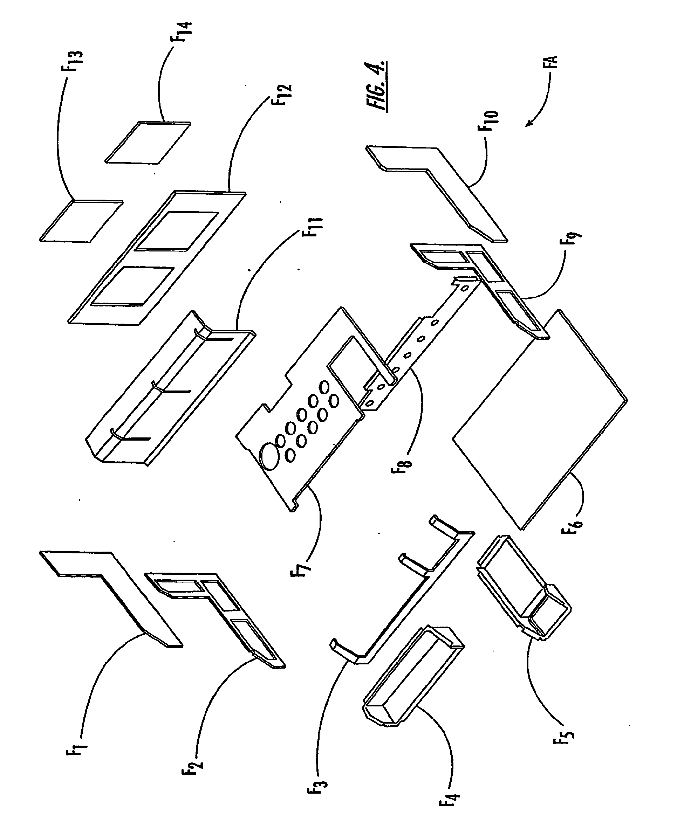

Figures 3 and 4 illustrate frame assembly **FA** in assembled and exploded forms, respectively. As shown in Figure 4, frame assembly **FA** is constructed from several frame elements **F**_{**1**} **- F**_{**14**}.

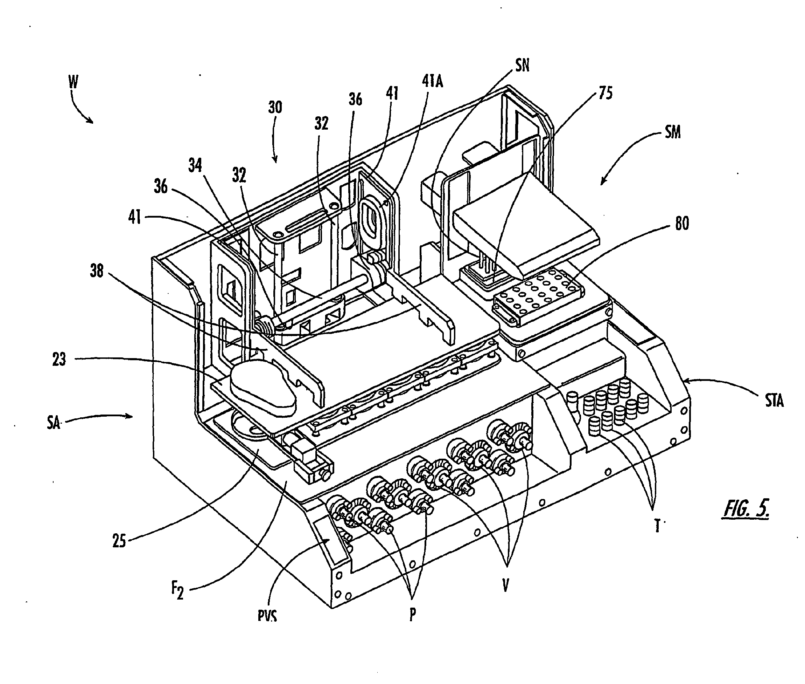

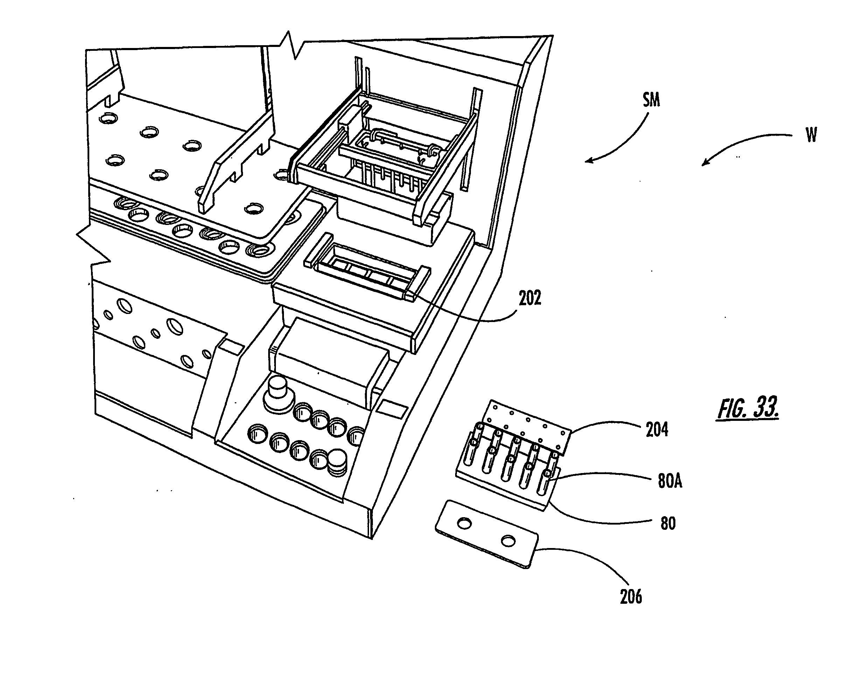

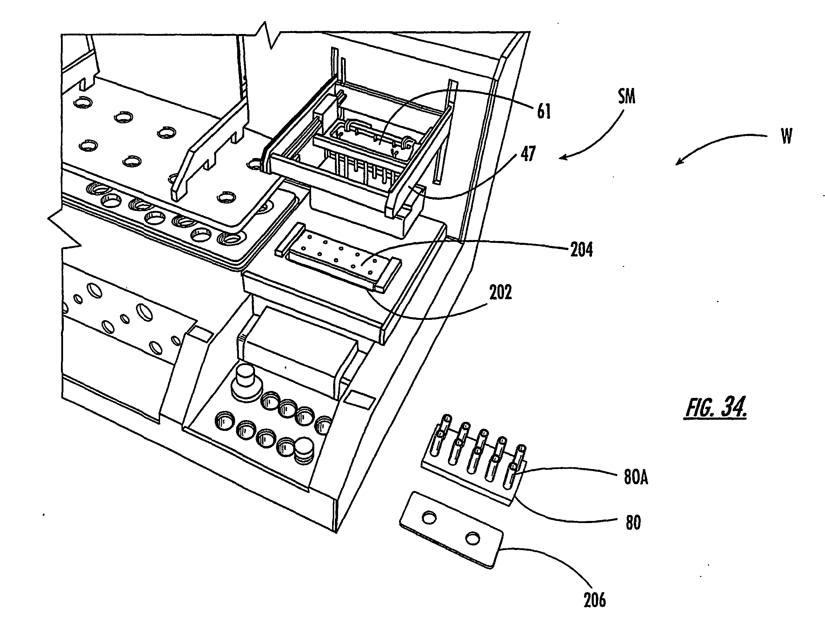

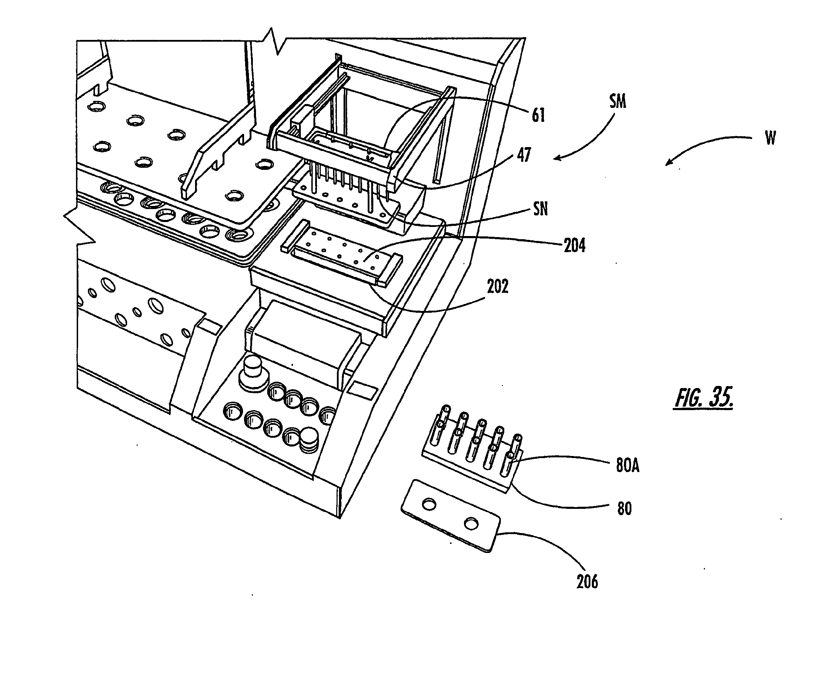

Referring to Figure 5, sealing assembly **SA** includes an upper clamping plate **23**, a lower clamping plate **25**, and a clamping drive subassembly generally designated **30**. Clamping drive subassembly **30** includes two lead screws **32** driven by a linear axis motor, an axle **34** supported by axle support members **36**, and support brackets **38** guided by tracks **41A** of track plates **41**. Upper clamping plate **23** is attached to support brackets **38**, while lower clamping plate **25** is mounted to deck or frame member **F**_{**7**}. Clamping drive subassembly **30** operates to drive upper clamping plate **23** from an open position as shown in Figure 33, through intermediate positions as shown in Figure 34, and ultimately to a closed, sealed position as shown in Figure 35. Sealing assembly **SA** thus can be characterized as having a clamshell-type configuration.

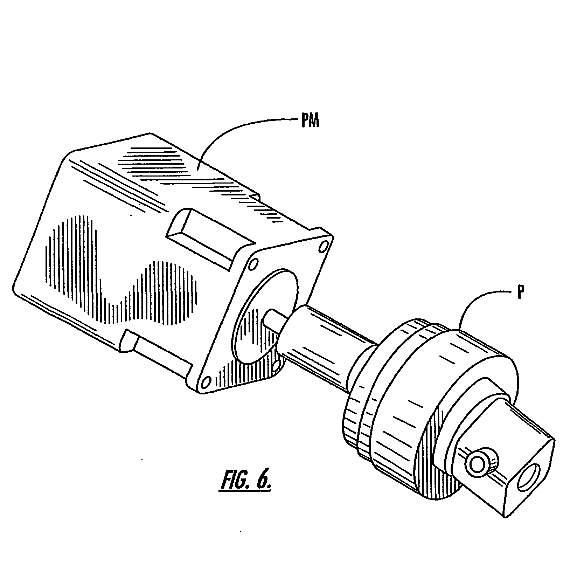

Metering pump and valve system **PVS** includes a plurality of pumps **P** and valves **V**. Pumps **P** can be considered in pairs, wherein each pair of pumps **P** shares a single multi-position valve **V**. Multi-position valves **V** permit the introduction of multiple solvents at different phases of drug recovery and system cleanup. In the present exemplary embodiment, there are ten pumps **P** for establishing ten separate flow channels and hence five valves **V**. Each flow channel is characterized by its own separate pump and valve subsystem. As shown in Figure 6, each pump **P** is driven by a pump drive preferably in the form of a servo motor **PM**.

Solvent tube arrangement **STA** is part of the fluid circuit of the solvent flow-through system. In the present embodiment, there are ten solvent tubes **T** corresponding to the ten flow channels.

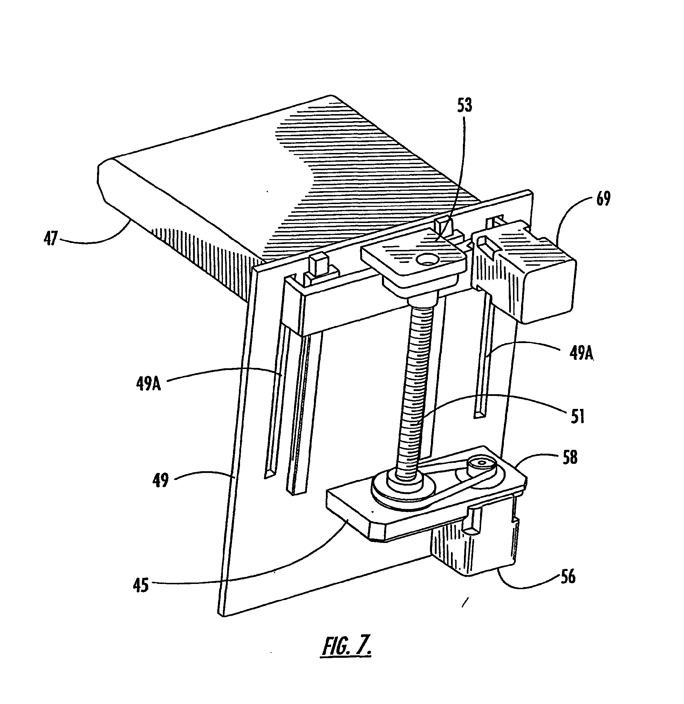

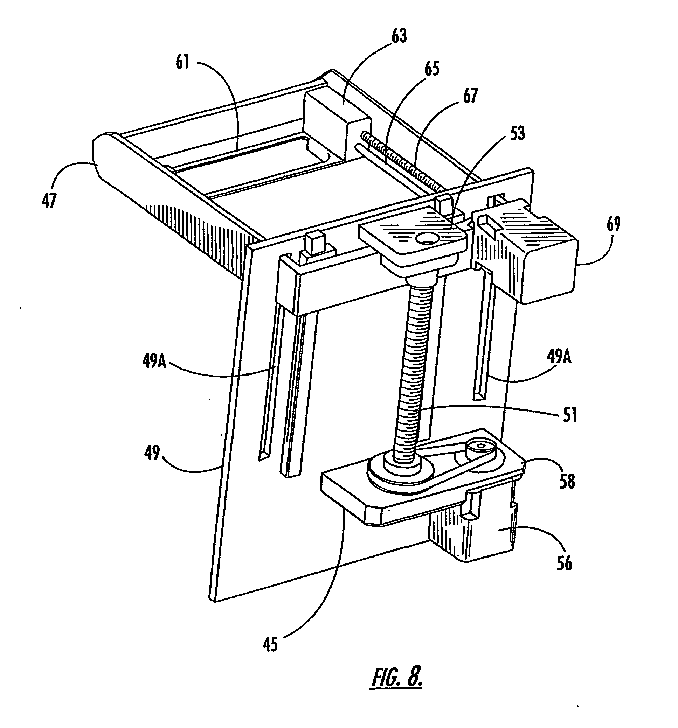

Referring to Figures 7 and 8, sampling module **SM** is actuated by a sampling module drive assembly generally designated **45**. Sampling module drive assembly **45** includes a vertically movable first bracket **47** guided in tracks **49A** of a back plate **49**. First bracket **47** is driven by a lead screw **51** through a movable drive head **53**. Lead screw **51** is powered by a linear axis motor **56** through a drive transmission **58**. A horizontally movable second bracket **61** is supported by a movable drive head **63** and is guided along two guide rods **65** (only one of which is shown) and lead screw **67**, both of which are mounted to first bracket **47**. Also mounted to first bracket **47** and movable therewith is a linear axis motor **69** providing torque power to lead screw **67**. Referring back to Figure 5, sampling module **SM** includes an array (e.g., ten) sampling needles **SN** movable by second bracket **61**, a waste receptacle **75**, and a test tube or vial rack **80**. Sampling module **SM** operates to transfer samples collected by sealing assembly **SA** to test tubes or vials positioned on rack 80, as described in more detail hereinbelow.

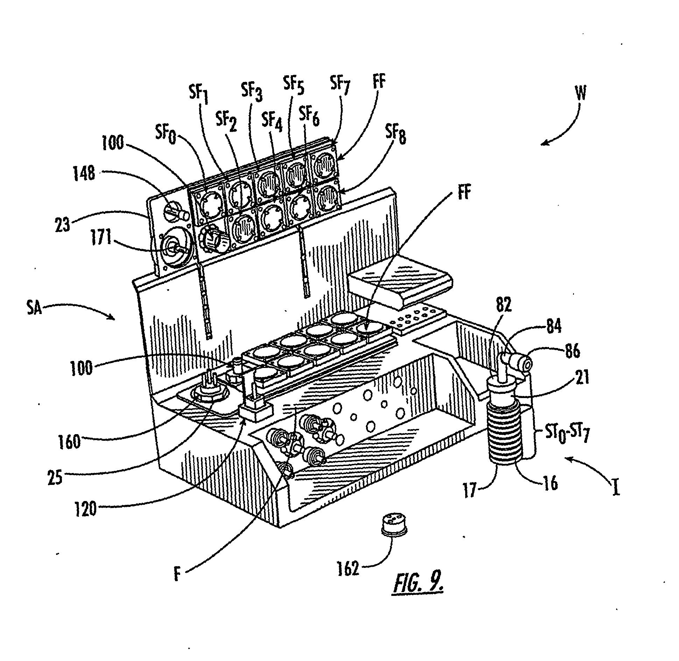

Referring generally to Figure 9, workstation **W** is shown with a multi-stage impactor such as cascade impactor **I**. Impactor **I** includes stage zero **ST**_{**0**}, classification stages **ST**_{**1**} **- ST**_{**7**}, bottom filter **16**, base element **17**, pre-separator **21**, a cover **82**, a throat **84**, and a mouthpiece **86** serving as an interface between impactor **I** and the actuator used to dose impactor **I**. Workstation **W** includes a number of fixtures provided for mounting and sealing the various elements of impactor **I** within sealing assembly **SA**. These fixtures include a stage fixture generally designated **SF**_{**0**} for stage zero **ST**_{**0**}, stage fixtures generally designated **SF**_{**1**} **- SF**_{**7**} for stages **ST**_{**1**} **- ST**_{**7**}, a filter fixture generally designated **FF** for filter **16**, a mouthpiece fixture generally designated **100**, a throat fixture generally designated **120**, and a pre-separator fixture generally designated **160** or inlet cone fixture generally designated **180**. Portions of each fixture **SF**_{**0**} **- SF**_{**7**}, **FF**, **100**, **120**, and **160** or **180** are mounted to both upper and lower damping plates **23** and **25**.

Referring to Figures 10 - 12, each stage fixture **SF**_{**0**} **- SF**_{**7**} and filter fixture **FF** includes an upper stage adaptor **91** mounted to upper clamping plate **23** and a lower stage adaptor **93** mounted to lower clamping plate **25** using fastening elements **96**, spacers **98** and springs **99.** Each stage **ST** or filter **16** is sealed between upper and lower stage adaptors **91** and **93** corresponding to that particular stage **ST** or filter **16**. Lower stage adaptor **93** has a circular groove **93A** for receiving a ring seal **95** between stage **ST** and lower stage adaptor **93**.

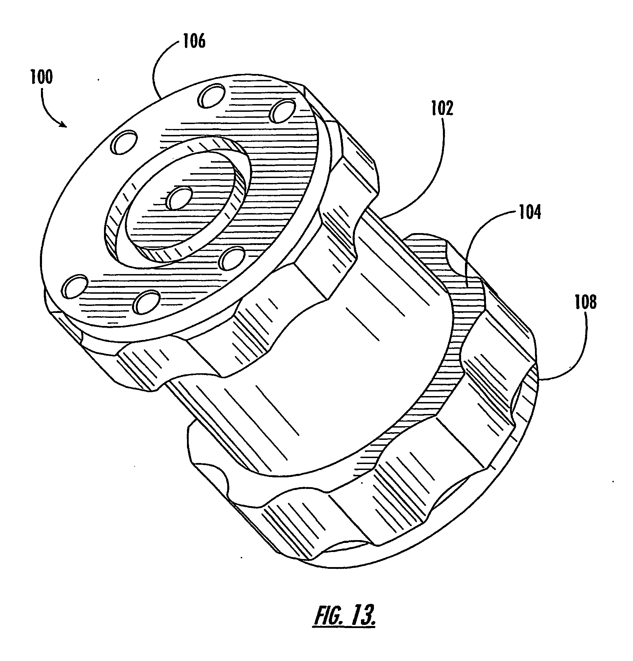

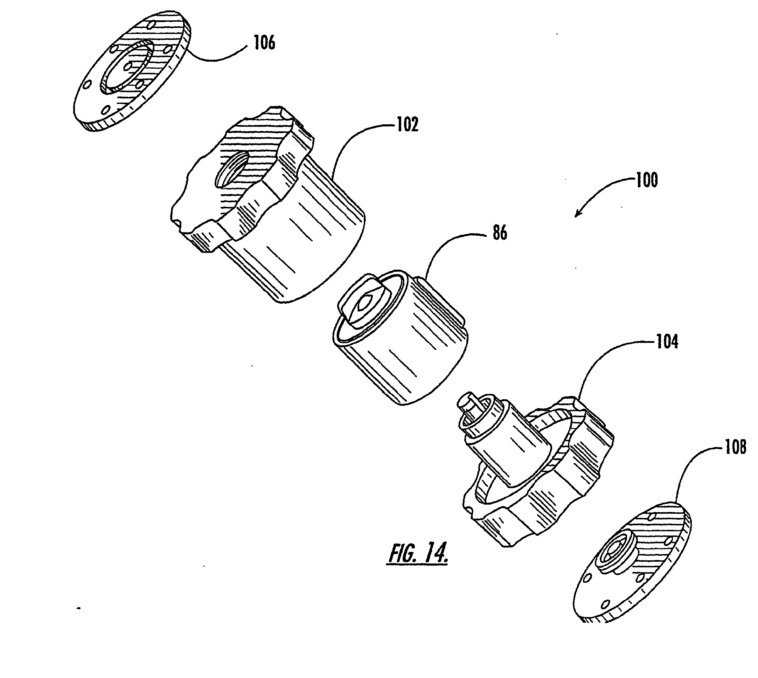

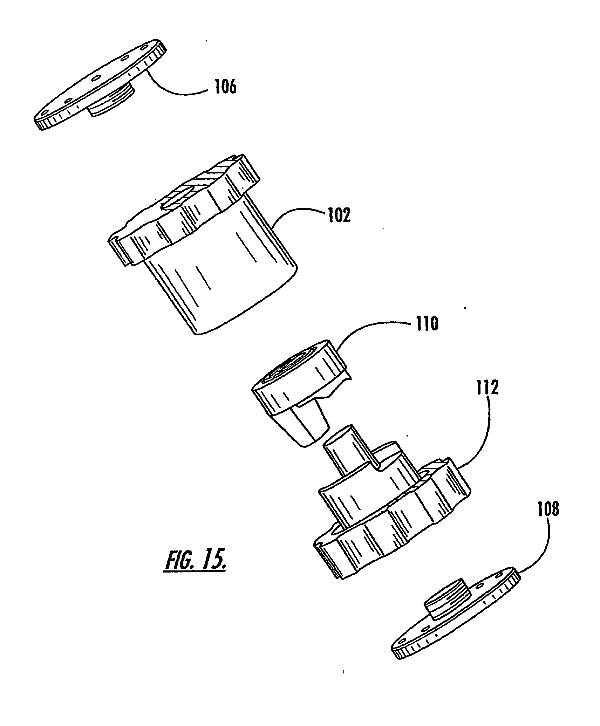

Referring to Figures 13 and 14, mouthpiece fixture **100** includes an upper mouthpiece adaptor **102** and a lower mouthpiece adaptor **104**. Mouthpiece **86** is sealed between upper and lower mouthpiece adaptors **102** and **104**. Upper mouthpiece adaptor **102** is mounted to an upper mounting plate **106** which is in turn mounted to upper clamping plate **23**. Lower mouthpiece adaptor **104** is mounted to a lower mounting plate **108** which is in turn mounted to lower clamping plate **25**. Figure 15 illustrates an alternative mouthpiece **110** and a corresponding lower mouthpiece adaptor **112**.

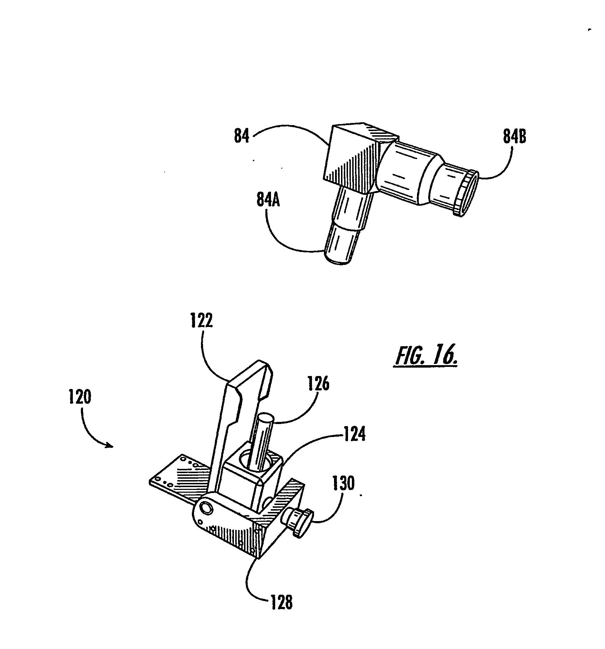

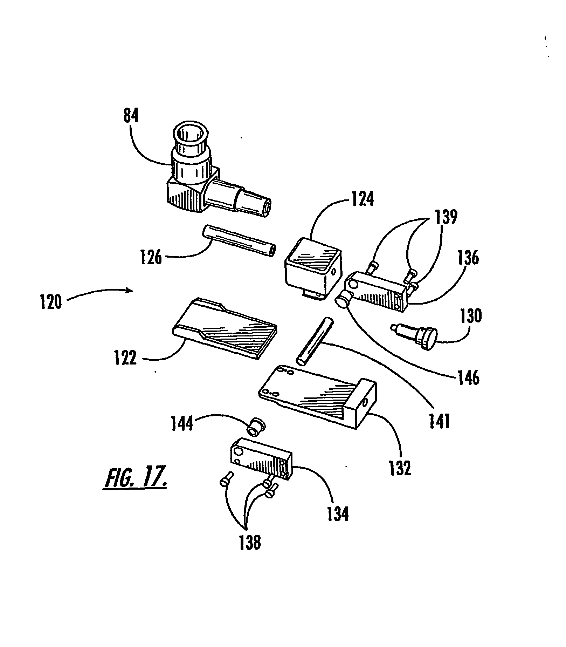

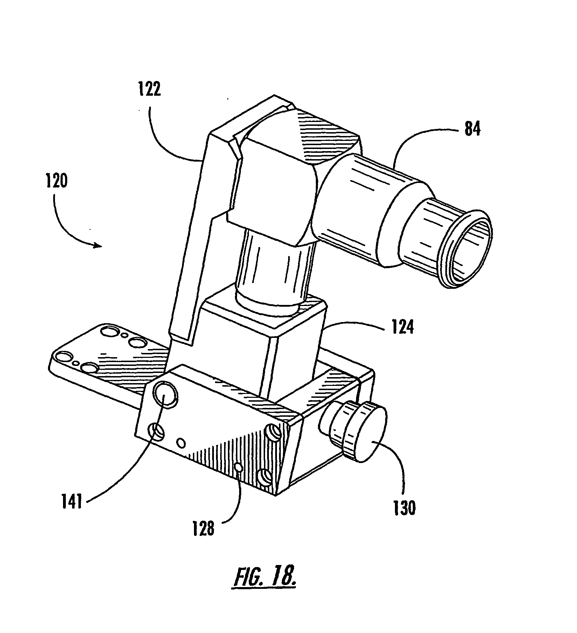

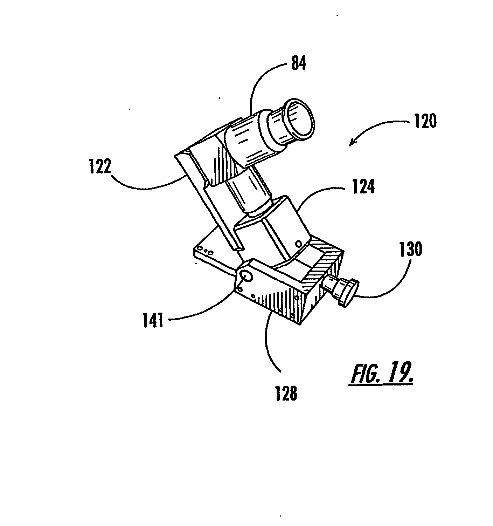

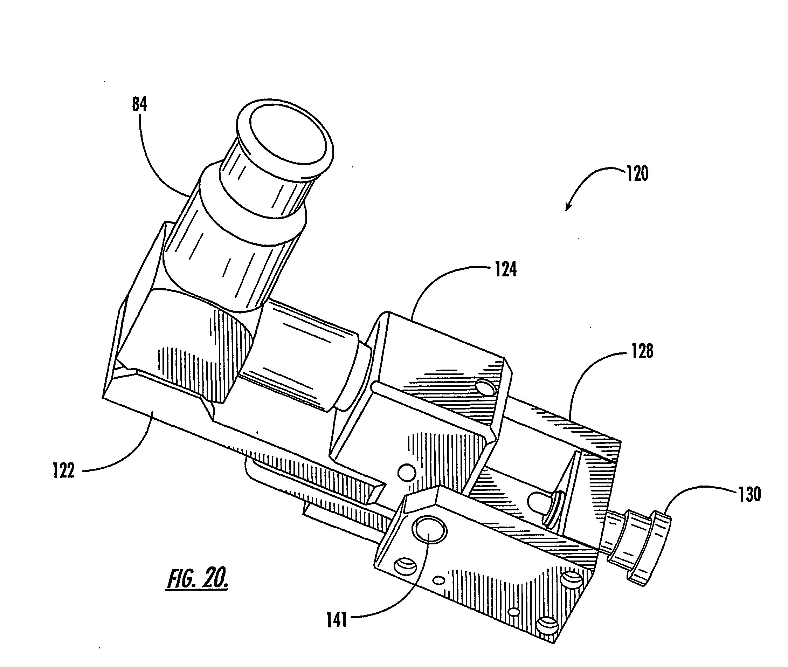

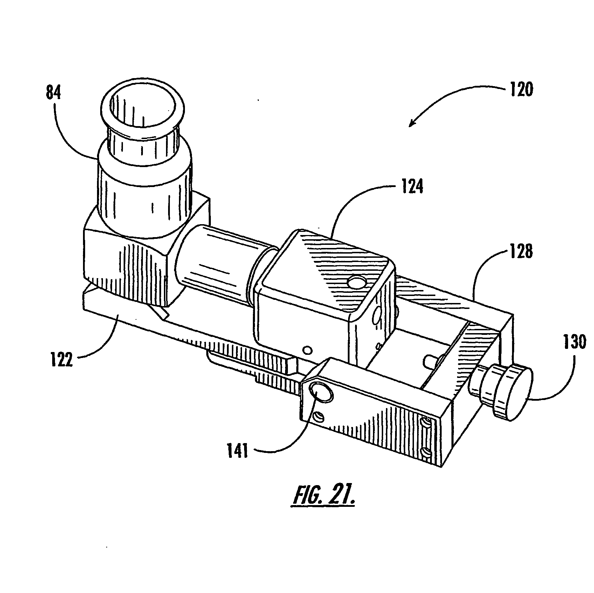

Referring to Figures 16 and 17, throat fixture **120** includes an upper throat adaptor **122**, a lower throat adaptor **124**, a mounting post **126**, a mounting block **128**, and a locking mechanism **130**. Mounting block **128** includes an L-shaped base plate **132** and two side plates **134** and **136** secured thereto with fasteners **138** and **139**. Mounting block **128** is mounted to deck or frame element **F**_{**7**} in front of lower damping plate **25**. An axle **141** is secured to side plates **134** and **136** in bearings **144** and **146**. Lower throat adaptor **124** is provided in the form of a socket and is adapted for receiving mounting post **126**. Axle **141** extends through lower throat adaptor **124** such that lower throat adaptor **124** can rotate about axle **141** once locking mechanism **130** is disengaged from lower throat adaptor **124**. Upper throat adaptor **122** is provided in the form of a plate and is secured between lower throat adaptor **124** and L-shaped base plate **132**. As shown in Figures 18-21, a first end **84A** of throat **84** is positioned onto mounting post **126** and rotates with upper and lower throat adaptors **122** and **124** from a vertical position to a horizontal position upon release of locking mechanism **130**. As shown in Figure 9, throat fixture **120** also includes an elongate throat sealing member **148** mounted to upper clamping plate **23**. Throat sealing member **148** inserts into a second end **84B** of throat **84** when upper clamping plate **23** is closed onto lower clamping plate **25**.

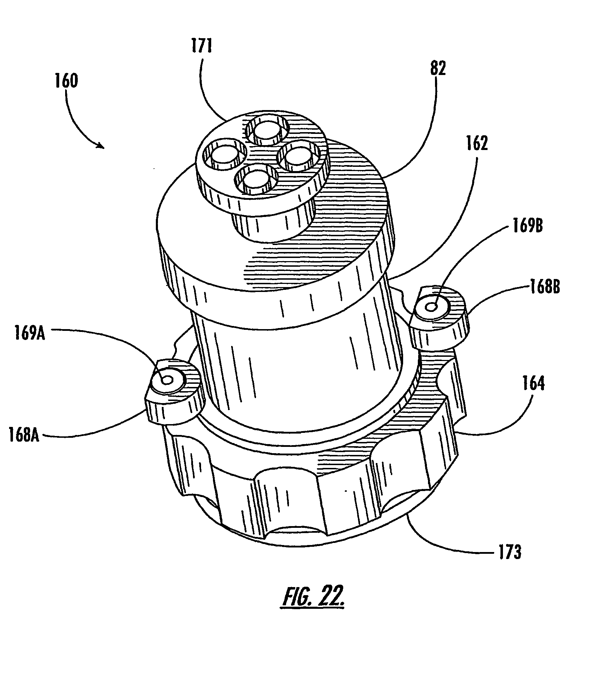

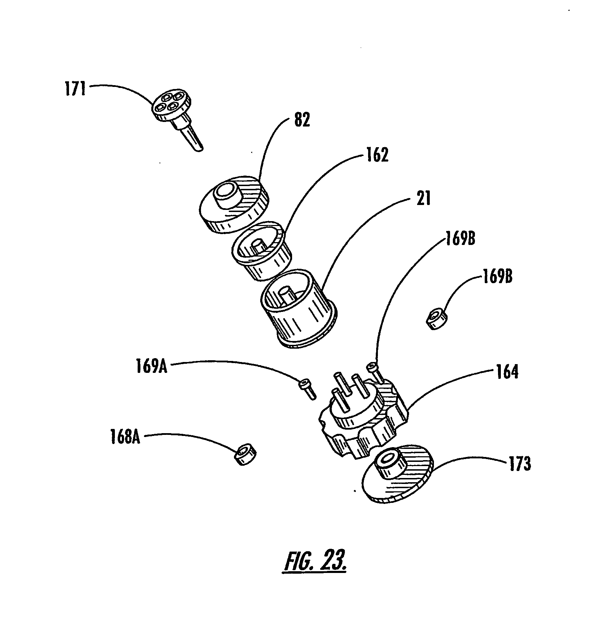

Referring to Figures 22 and 23, pre-separator fixture **160** includes an upper pre-separator adaptor **162** and a lower pre-separator adaptor **164**, Pre-separator **21** is sealed between upper and lower pre-separator adaptors **162** and **164** with the assistance of locking mechanisms **168A** and **168B** secured to lower pre-separator adaptor **164** with fasteners **169A** and **169B**. Cover **82** from impactor **I** and upper pre-separator adaptor **162** are mounted to a mounting post **171**, which is in turn mounted to upper clamping plate **23**. Lower pre-separator adaptor **164** is mounted to a mounting plate **173**, which is in turn mounted to lower clamping plate **25**.

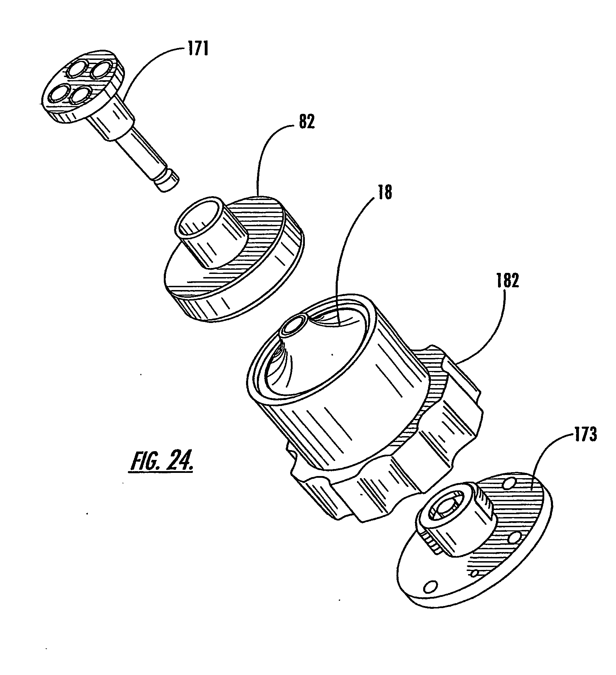

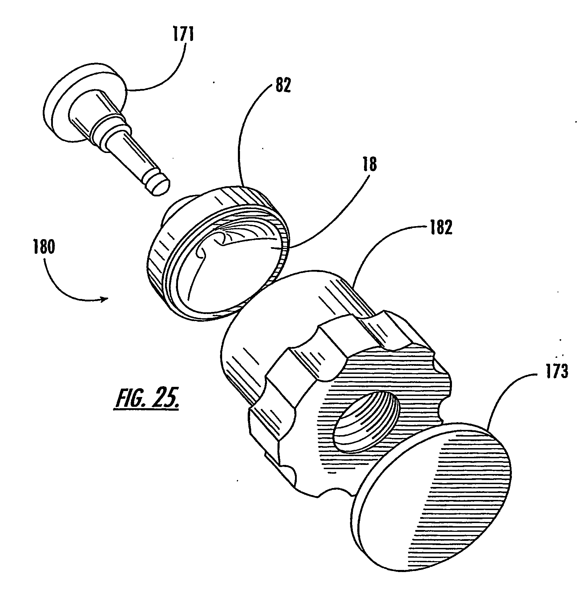

Referring to Figures 24 and 25, inlet cone fixture **180** is substituted for pre-separator fixture **21** when inlet cone **18** is used in conjunction with the impaction test. Inlet cone fixture **180** includes an inlet cone adaptor **182**. Inlet cone **18** is sealed between inlet cone adaptor **182** and cover **82**. Cover **82** and inlet cone **18** are mounted to mounting post **171**, and inlet cone adaptor **182** is mounted to mounting plate **173**.

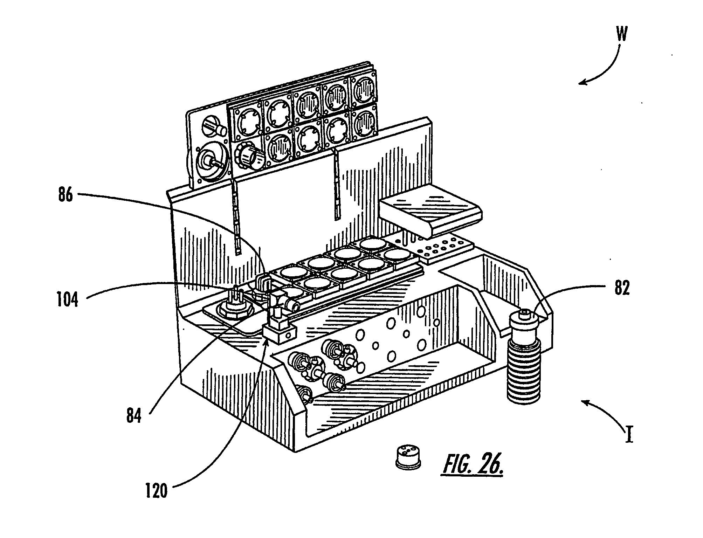

Referring to Figures 26 - 38, the novel flow-through design and automated operation of workstation **W** to facilitate drug recovery (i.e., how solvent is introduced to the components containing drug and how the drug is removed) will now be described.

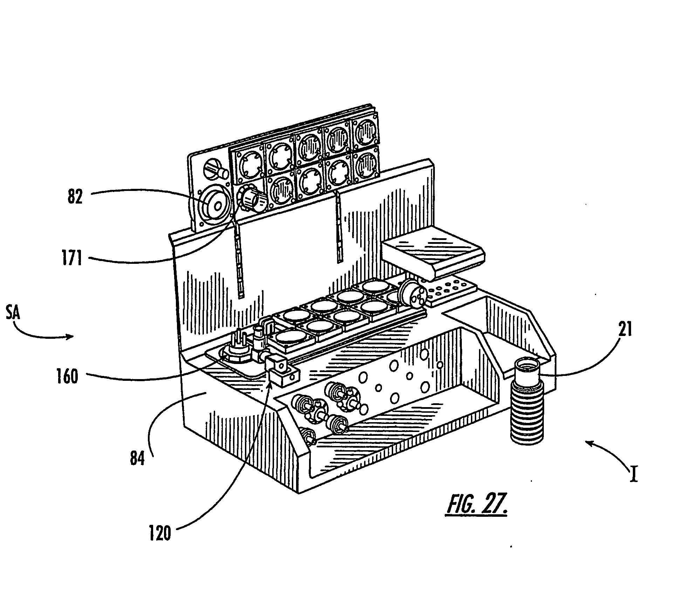

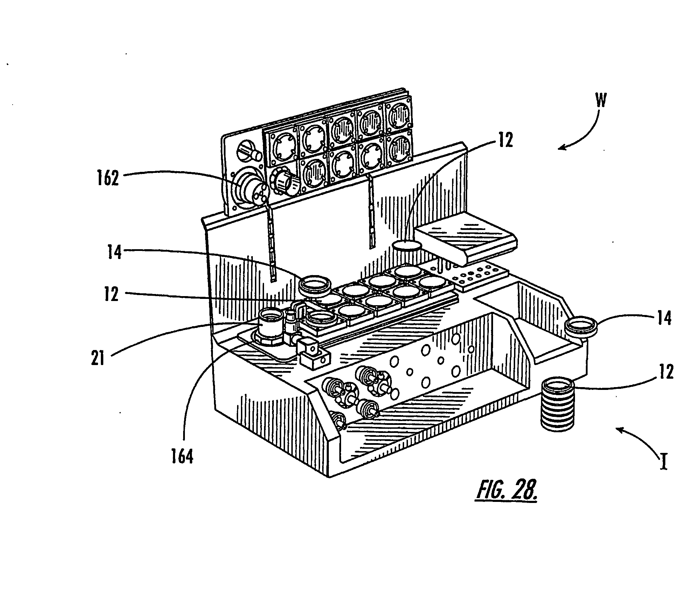

Referring to Figure 26, after impactor **I** has been dosed, mouthpiece 86 is removed from impactor **I** and inserted onto lower mouthpiece adaptor **104**. Throat **84** is then removed and inserted onto mounting post **126** of throat fixture **120**, which is initially locked in its vertical position. Referring to Figure 27, throat fixture **120** is unlocked and rotated into its horizontal position such that throat **84** is disposed within the area of sealing assembly **SA**. Cover **82** is removed from impactor **I** and inserted onto mounting post **171** of pre-separator fixture **160**. Referring to Figure 28, upper pre-separator adaptor **162** is inserted onto mounting post **171** and pre-separator **21** is removed from impactor **I** and inserted onto lower pre-separator adaptor **164.** Figure 28 also shows that jet plates **12** and impaction discs **14** of each respective stage **ST** have begun to be removed from impactor **I** and placed onto corresponding lower stage adaptors **93**.

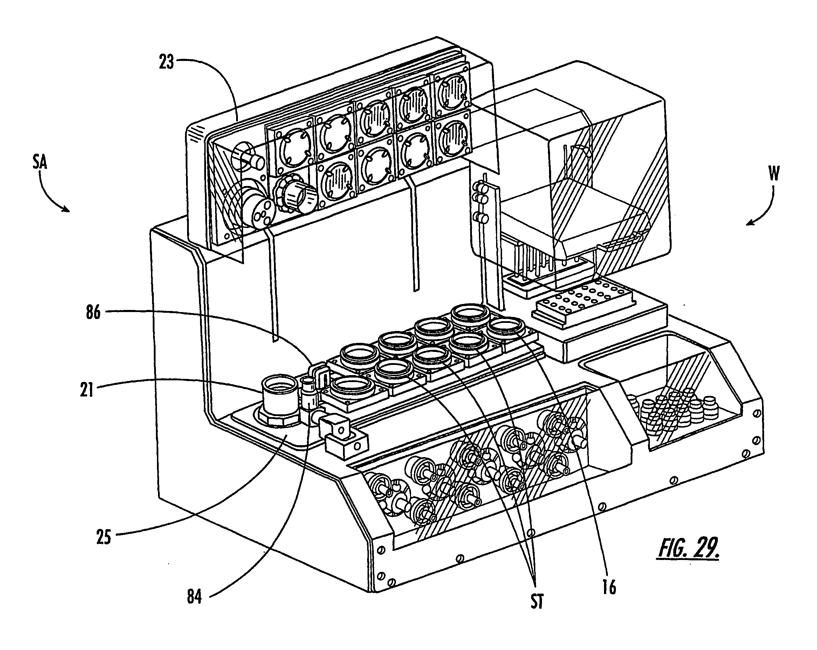

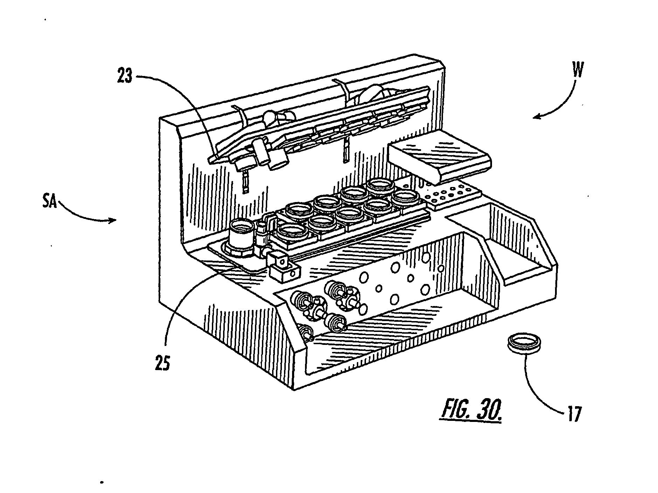

Referring to Figure 29, impactor **I** has been completely disassembled and all components containing particles have been loaded onto those portions of fixtures **SF**_{**0**} **- SF**_{**7**}, **FF**, **100**, **120**, and **160** or **180** disposed on lower clamping plate **25**. Upper clamping plate **23** is then caused by clamping drive subassembly **30** to move from its open position shown in Figure 29, rotate through intermediate positions such as that shown in Figure 30, and ultimately move to its closed position shown in Figure 31. Once the closed position of sealing assembly **SA** is reached, all particle-containing components of impactor **I** are sealed simultaneously and each fixture **SF**_{**0**} **- SF**_{**7**}, **FF**, **100**, **120**, and **160** or **180** creates a sealed chamber for its associated component. Owing to the design of the various profiles of fixtures **SF**_{**0**} **- SF**_{**7**}**, FF**, **100**, **120**, and **160** or **180**, the dead spaces within each impactor component are minimized, which greatly facilitates efficient flow of solvent to the impactor components. In the closed position, the solvent circuit defined by sealing assembly **SA**, pump and valve system **PVS**, solvent tube arrangement **STA**, sampling module SM, and various fluid conduits communicating with these modules, is essentially closed.

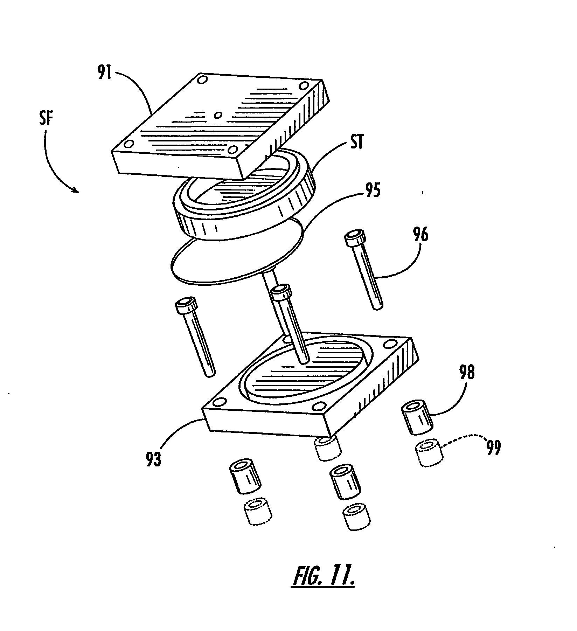

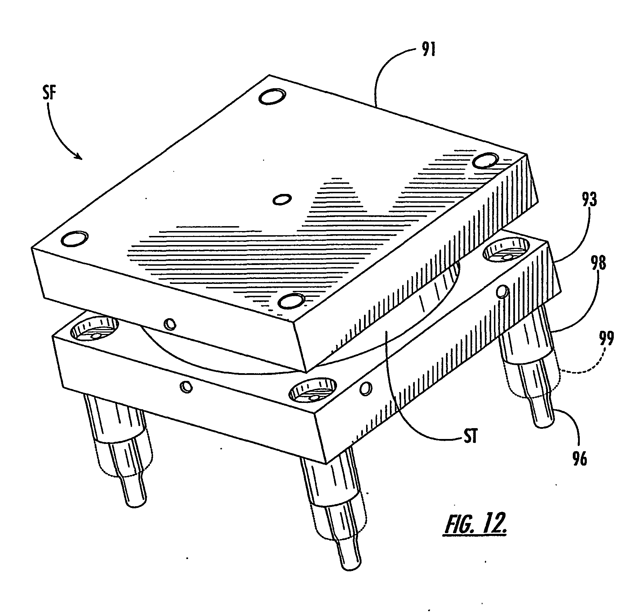

Similar to the case of stage and filter fixtures **SF**_{**0**} **- SF**_{**7**} and **FF** wherein springs **99** are provided as shown in Figures 11 and 12, other fixtures **100**, 120, and 160 or 180 are spring-loaded within sealing assembly SA in order to equalize the clamping force and thereby overcome any machining and operating tolerances and ensure a good seal by fixtures **SF**_{**0**} **- SF7**, **FF**, **100**, **120,** and **160** or **180**. Thus, for example, springs or other types of biasing members (not shown) are used in mounting upper mounting plate **106** of mouthpiece fixture **100**, throat sealing member **148** of throat fixture **120**, and mounting post **171** of either pre-separator fixture **160** or inlet cone fixture **180** to upper clamping plate **23**.

Referring generally to Figure 31, during the particulate sample recovery process, pumps **P** are activated to draw metered quantities of solvent from an external solvent reservoir into solvent tubes **T**. Valves **V** are then repositioned to form a dosed loop system. Pumps **P** are activated to direct solvent from solvent tubes **T** into a top portion **SA**_{**1**} (see Figure 2) of sealing assembly **SA**. Solvent then flows through sealing assembly **SA** across the impactor components sealed therein, thereby collecting the particles contained on the various surfaces of the impactor components. The sample-containing solvent then flows through a bottom portion **SA**_{**2**} of sealing assembly **SA** and is recirculated back through the plumbing system to solvent tubes **T.** By reconfiguring pumps **P** and valves **V**, the sample-containing solvent is directed to sampling module **SM**.

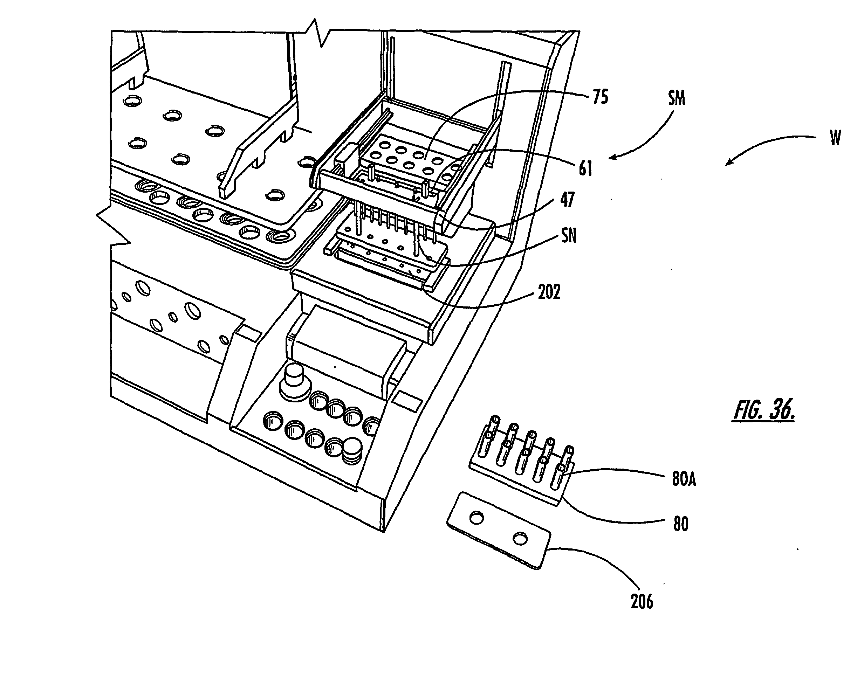

Referring to Figures 32 - 38, the details of sampling module **SM** will now be described. Sampling module **SM** includes a novel automated pump calibration system that can be utilized prior to operation of workstation **W** and initiation of the sample collection process. The pump calibration system incorporates a commercially available laboratory balance **B** into sampling module **SM** below the area at which rack **80** is normally positioned, and also includes a detachable solvent reservoir **202** and reservoir cover **204**. During the pump calibration procedure, solvent reservoir **202** is filled with solvent and placed onto balance **B** as shown in Figure 33 and cover **204** is placed onto reservoir **202** as shown in Figure 34. Reservoir **202** is weighed. Sampling module **SM** then causes first and second brackets **47** and **61** to move as shown in Figure 35 until sampling needles **SN** are positioned over solvent reservoir **202** as shown in Figure 36. In sequential manner, each corresponding pump **P** and sampling needle **SN** are then caused to draw a volume of solvent, having a quantitative value indicated by pump **P** or its valve **V**, out of reservoir **202** and into one of solvent tubes **T**. Pump **P** is then stopped and sampling needles **SN** are pulled out of reservoir **202**. Pump **P** is reversed and sampling needle **SN** dispenses the volume of solvent back into reservoir **202**. Balance **B** is used in performing gravimetric measurements of the volume of solvent dispensed by each pump **P** into solvent reservoir **202**. If necessary, minor adjustments are made to one or more of pumps **P** or valves V and the updated information is stored in the system software.

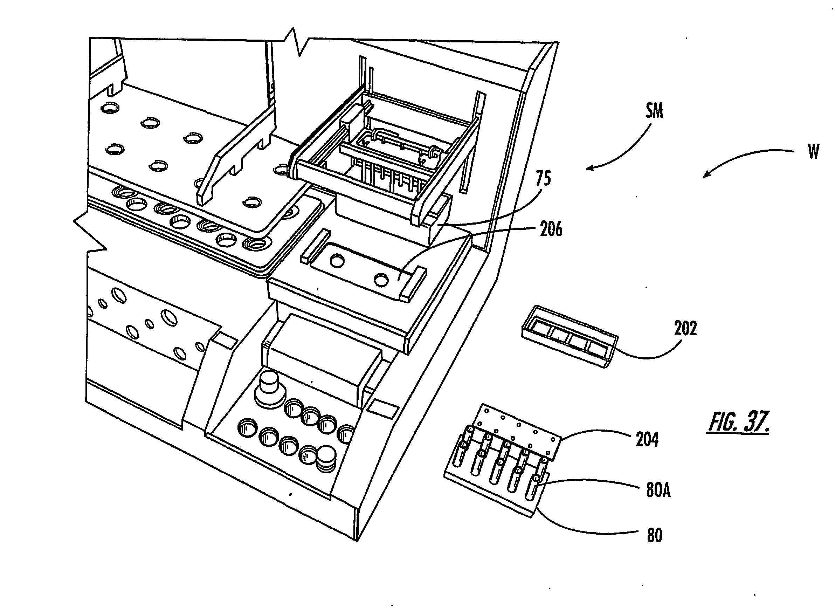

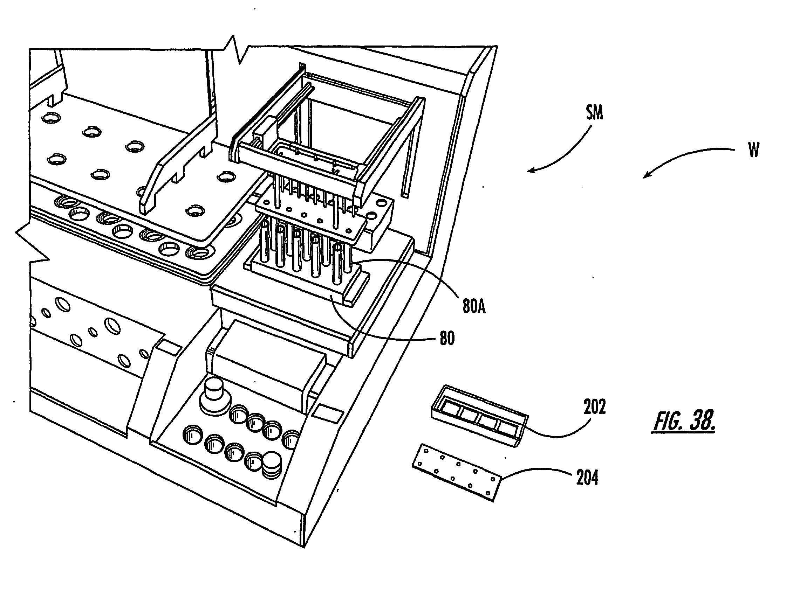

Referring to Figures 37 and 38, once the calibration procedure is completed, reservoir **202** and cover **204** are removed from sampling module **SM** and replaced with a rack mounting plate **206** and rack **80** containing test tubes or vials **80A.** Sampling module **SM** is then used after the sample recovery process to direct pre-programmed quantities of sample-containing solvent into test tubes or vials **80A** so that appropriate analysis can be conducted on the samples. The design of sampling module **SM** permits automated parallel transfer of the sample solutions from each impactor component into collection vials **80A** or to waste receptacle **75**. Neither the design of the rack **80**, the number of sets of collection vials **80A** contained on rack **80,** nor the size of such vials **80A** affects the automated operation of sampling module **SM.**

It should be noted that, apart from the exemplary embodiment described hereinabove, sealing assembly **SA** could be modified to adapt to other types of impaction testing equipment. That is, the present invention is not limited to use in conjunction with cascade-type impactors **I**.

It will be understood that various details of the invention may be changed without departing from the scope of the invention. Furthermore, the foregoing description is for the purpose of illustration only, and not for the purpose of limitation-the invention being defined by the claims.

The present application is divided from European (PCT) patent application No. 01 932 778.2 (WO-A-01/84108), the entire original content of which is hereby incorporated herein by reference.

## Claims

1. An automated sealing assembly for use in an automated sample collection workstation comprising:
(a) a lower clamping plate;
(b) an upper damping plate movable with respect to the lower clamping plate and adapted for sealable engagement with the lower clamping plate; and
(c) a clamping drive assembly including a track plate having a track, an axle support, an axle supported by the axle support, a bracket connected to the upper clamping plate and to the axle, the bracket movably and rotatably supported in the track and pivotable about the axle, a motor, and a drive member powered by the motor and adapted to move the bracket along the track.

2. The sealing assembly according to claim 1 further comprising a plurality of fixtures adapted to receive particle-containing components from a particle testing device.

3. The sealing assembly according to claim 2 wherein the fixtures are mounted to the upper and lower damping plates.

4. The sealing assembly according to daim 3 wherein the fixtures include biasing members.

5. The sealing assembly according to claim 2 wherein the particle-containing components include stages from an impaction testing device.

6. An automated sealing assembly for use in an automated sample collection workstation comprising:
(a) a deck;
(b) a lower clamping plate mounted on the deck;
(c) an upper clamping plate movable with respect to the lower clamping plate and adapted for sealable engagement with the lower clamping plate; and
(d) a throat fixture sealable between the upper and lower damping plates.

7. The sealing assembly according to daim 6 comprising a plurality of stage fixtures.

8. The sealing assembly according to claim 6 wherein the throat fixture includes a throat adaptor.

9. The sealing assembly according to claim 6 wherein the throat fixture includes a throat sealing member mounted to the upper clamping plate.

10. The sealing assembly according to claim 6 wherein the throat fixture is mounted on the deck and rotatable onto the lower damping plate.

11. The sealing assembly according to claim 10 wherein the throat fixture includes a throat adaptor.

12. The sealing assembly according to daim 11 wherein the throat fixture includes a mounting block mounted to the deck and the throat adaptor is rotatably mounted to the mounting block.

13. The sealing assembly according to claim 11 wherein the throat fixture includes a mounting post adapted to receive a first end of a throat, and a throat sealing member mounted to the upper clamping plate and adapted to receive a second end of the throat.

14. An automated sealing assembly for use in an automated sample collection workstation comprising:
(a) a lower clamping plate;
(b) an upper clamping plate movable with respect to the lower clamping plate and adapted for sealable engagement with the lower damping plate; and
(c) an impactor flow unit fixture including an upper portion and a lower portion, the upper portion mounted to the upper damping plate and the lower portion mounted to the lower clamping plate.

15. The sealing assembly according to claim 14 wherein the impactor flow unit fixture is a pre-separator fixture.

16. The sealing assembly according to claim 15 wherein the pre-separator fixture includes an upper pre-separator adaptor removably mounted to the upper clamping plate and a lower pre-separator adaptor removably mounted to the lower damping plate.

17. The sealing assembly according to claim 14 wherein the impactor flow unit fixture is an inlet cone fixture.

18. The sealing assembly according to claim 15 wherein the inlet cone fixture includes an inlet cone adaptor removably mounted to the lower clamping plate.

19. An automated solvent flow-through system for use in an automated sample collection workstation comprising:
(a) a sealing assembly;
(b) a sampling module;
(c) a plurality of pairs of metering pumps; and
(d) a plurality of multi-position valves adjustable to define plurality of separate flow channels throughout the workstation, each valve communicating with a corresponding one of the pairs of metering pumps and adapted to transfer a fluid to and from the metering pumps, the sealing assembly and the sampling module.

20. An automated sampling module for use in an automated sample collection workstation comprising:
(a) a guide plate having a track disposed along a first axis;
(b) a first bracket movably supported in the track;
(c) a first motor;
(d) a first drive member powered by the first motor and adapted to move the first bracket along the track;
(e) a guide member movable with the first bracket;
(f) a second bracket supported by the guide member and movable along the guide member along a second axis;
(g) a second motor; and
(h) a second drive member powered by the second motor and adapted to move the second bracket along the guide member.

21. The sampling module according to claim 20 further comprising a plurality of sampling needles supported by the second bracket and movable with the second bracket along the first and second axes.

22. An automated pump calibration system for use in an automated sample collection workstation comprising:
(a) a balance;
(b) a sampling module including a sampling needle;
(c) an adjustable metering pump communicating with the sampling needle; and
(d) a reservoir removably disposed on the balance.

23. The pump calibration system according to claim 22 wherein the balance is integrated into the sampling module.

24. An automated sample collection workstation comprising:
(a) a sealing assembly;
(b) a sampling module including a sampling needle; and
(c) a'solvent flow-through system including a pump and valve, the pump and valve communicating with the sealing assembly and the sampling needle.

25. The workstation according to claim 24 further comprising a pump calibration system communicating with the solvent flow-through system.

26. A method for automatically recovering particulate samples from a particulate testing device comprising the steps of:
(a) providing a sealing assembly including a lower clamping plate, an upper clamping plate movable in relation to the lower clamping plate, and a plurality of fixtures;
(b) installing a plurality of particle-containing components from a particulate test device onto corresponding fixtures of the sealing assembly;
(c) causing the upper clamping plate to engage the lower clamping plate whereby the upper and lower clamping plates cooperate with the fixtures to define a plurality of separate rinsing chambers in which corresponding particle-containing components are disposed; and
(d) causing solvent to flow through the sealing assembly to transport particles from each rinsing chamber through a plurality of separate flow channels.

27. The method according to claim 26 further comprising the step of causing transporting the particles through the plurality of separate flow channels to a plurality of corresponding sampling needles.

28. A method for automatically calibrating one or more metering pumps comprising the steps of:
(a) providing a workstation including a fluid circulation system and a metering pump;
(b) providing a sampling module including a sampling needle communicating with the fluid circulation system and a sample rack disposed on an open rack mounting region;
(c) installing a balance device below the rack mounting region;
(d) removing the sample rack from the rack mounting region;
(e) installing a reservoir in the rack mounting region in operative engagement with the balance device;
(f) causing the metering pump to transfer an indicated quantity of fluid through the fluid circulation system to the sampling needle and dispensing the quantity of fluid into the reservoir;
(g) causing the balance device to measure an actual quantity of fluid dispensed into the reservoir; and
(h) adjusting the metering pump if the actual quantity measured by the balance device is different from the indicated quantity indicated by the metering pump.
